(19) Europäisches Patentamt
European Patent Office
Office européen des brevets

(11) **EP 3 817 251 B1**

(12) **EUROPEAN PATENT SPECIFICATION**

(45) Date of publication and mention
of the grant of the patent:
**20.09.2023  Bulletin 2023/38**

(21) Application number: **19825814.7**

(22) Date of filing: **26.06.2019**

(51) International Patent Classification (IPC):
*H04L 25/03* (2006.01)      *H04J 13/10* (2011.01)

(52) Cooperative Patent Classification (CPC):
**H04L 25/03872; H04J 13/0029; H04J 13/10**

(86) International application number:
**PCT/CN2019/093106**

(87) International publication number:
**WO 2020/001499 (02.01.2020 Gazette 2020/01)**

(54) **DATA PROCESSING METHOD, DEVICE, AND COMPUTER-READABLE STORAGE MEDIUM**

DATENVERARBEITUNGSVERFAHREN, VORRICHTUNG UND COMPUTERLESBARES SPEICHERMEDIUM

PROCÉDÉ DE TRAITEMENT DE DONNÉES, DISPOSITIF ET SUPPORT DE STOCKAGE LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **28.06.2018  CN 201810691019**

(43) Date of publication of application:
**05.05.2021  Bulletin 2021/18**

(73) Proprietor: **ZTE Corporation**
**shenzhen Guangdong  518057 (CN)**

(72) Inventors:
• **GUO, Leimin**
**Nanjing, Jiangsu 210012 (CN)**
• **XU, Jinhai**
**Nanjing, Jiangsu 210012 (CN)**
• **ZHENG, Ruijie**
**Nanjing, Jiangsu 210012 (CN)**
• **ZHENG, Chaofeng**
**Nanjing, Jiangsu 210012 (CN)**
• **WU, Ting**
**Nanjing, Jiangsu 210012 (CN)**

(74) Representative: **WBH Wachenhausen**
**Patentanwälte PartG mbB**
**Müllerstraße 40**
**80469 München (DE)**

(56) References cited:
WO-A1-2018/076894      CN-A- 101 610 122
CN-A- 101 925 056      CN-A- 105 227 259
CN-A- 105 391 545      CN-A- 108 023 661

## Description

### TECHNICAL FIELD

The present application relates to, but not limited to, the technical field of communication, and in particular, to a data processing method, device, and a computer-readable storage medium.

### BACKGROUND

Scrambling and descrambling are commonly used technologies in wireless communication, in which the sender scrambles data through the scrambling code sequence, and the receiver descrambles data by using the same scrambling code sequence, so as to make the data transmitted in the channel random and effectively avoid interference between data.

The scrambling code sequence usually adopts a pseudo-random sequence, which includes m sequence, Gold sequence and so on. The Gold sequence is a pseudo-random sequence with advantageous characteristics proposed and analyzed by R. Gold in 1967 on the basis of m sequence, which is formed by a preferred pair of two m sequences with a same code length and code clock rate through modulo 2 addition.

In related technologies, the pseudo-random sequence generation in scrambling and descrambling takes time, and the pseudo-random generation time increases linearly with the increase of sequence length.

The document CN105227259A provides an M sequence parallel generation method. The method comprises the steps of: 1) obtaining a recursion formula of an M sequence, determining a parallelism degree w and inputting initial M sequence positions; 2) synchronously reading w sets of known M sequence positions serving as input data, and synchronously carrying out w paths of recursion calculation according to the recursion formula, and obtaining original unknown w M sequence positions, wherein one set of M sequence positions is corresponding to each exponential term on the right side of the recursion formula for one path of recursion calculation; and 3) recording w M sequence positions calculated in the step 2), synchronously outputting the w M sequence positions, and then returning to the step 2) so as to calculate a next set of w M sequence positions. The invention further provides a corresponding M sequence parallel generation device. According to the invention, the parallelism degree is high, the feedback is simple, the initialization is simple, and both hardware realization and software realization are simple.

### SUMMARY

In view of this, according to some embodiments of the present application, a data processing method, device, and a computer-readable storage medium are provided.

An embodiment of the present application provides a data processing method. The data processing method includes: determining a parallel processing bit width M for generating a pseudo-random sequence; obtaining a first sub-sequence $X_{1\_M}$ of a first sequence according to the first sequence generated by a first sequence generation formula, and deriving a recursive formula $x_1(n + i * M)$ $(i \geq 1)$ of the first sequence according to the first sequence generation formula and the first sub-sequence $X_{1\_M}$ of the first sequence; obtaining a first sub-sequence $X_{2\_M}$ of a second sequence according to the second sequence generated by a second sequence generation formula, and deriving a recursive formula $x_2(n + i * M)$ $(i \geq 1)$ of the second sequence according to the second sequence generation formula and the first sub-sequence $X_{2\_M}$ of the second sequence; generating a pseudo-random sequence in parallel and iteratively according to the recursive formula $x_1(n + i * M)$ $(i \geq 1)$ of the first sequence, the recursive formula $x_2(n + i * M)$ $(i \geq 1)$ of the second sequence, the first sub-sequence $X_{1\_M}$ of the first sequence and the first sub-sequence $X_{2\_M}$ of the second sequence; and scrambling or descrambling data according to the generated pseudo-random sequence, where the step of generating a pseudo-random sequence in parallel and iteratively according to the recursive formula $x_1(n + i * M)$ $(i \geq 1)$ of the first sequence, the recursive formula $x_2(n + i * M)$ $(i >\_ 1)$ of the second sequence, the first sub-sequence $X_{1\_M}$ of the first sequence and the first sub-sequence $X_{2\_M}$ of the second sequence (S14) includes:

> starting a thread, and obtaining a second sub-sequence $X_{1\_2M}$ of the first sequence through calculation according to a recursive formula $x_1(n + M)$ of the first sequence and the first sub-sequence $X_{1\_M}$ of the first sequence; wherein, a second sub-sequence $X_{2\_2M}$ of the second sequence is obtained through calculation in a same way according to a recursive formula $x_2(n + M)$ of the second sequence and the first sub-sequence $X_{2\_M}$ of the second sequence; starting two threads, and obtaining a third sub-sequence $X_{1\_3M}$ of the first sequence and a fourth sub-sequence $X_{1\_4M}$ of the first sequence through parallel calculation of the two threads, according to a recursive formula $x_1(n + 2M)$ of the first sequence, the first sub-sequence $X_{1\_M}$ of the first sequence and the second sub-sequence $X_{1\_2M}$ of the first sequence; wherein, a third sub-sequence $X_{2\_3M}$ of the second sequence and a fourth sub-sequence $X_{2\_4M}$ of the second sequence are obtained through parallel calculation in a same way, according to a recursive formula $x_2(n + 2M)$ of the second sequence, the first sub-sequence $X_{2\_M}$ of the second sequence and the second sub-sequence $X_{2\_2M}$ of the second sequence;

starting four threads, and obtaining a fifth sub-sequence $X_{1\_5M}$ of the first sequence, a sixth sub-sequence $X_{1\_6M}$ of the first sequence, a seventh sub-sequence $X_{1\_7M}$ of the first sequence, and an eighth sub-sequence $X_{1\_8M}$ of the first sequence through parallel calculation of the four threads, according to a recursive formula $x_1(n + 4M)$ of the first sequence, the first sub-sequence $X_{1\_M}$ of the first sequence, the second sub-sequence $X_{1\_2M}$ of the first sequence, the third sub-sequence $X_{1\_3M}$ of the first sequence and the fourth sub-sequence $X_{1\_4M}$ of the first sequence; wherein, a fifth sub-sequence $X_{2\_5M}$ of the second sequence, a sixth sub-sequence $X_{2\_6M}$ of the second sequence, a seventh sub-sequence $X_{2\_7M}$ of the second sequence, and an eighth sub-sequence $X_{2\_8M}$ of the second sequence are obtained through parallel calculation a same way, according to a recursive formula $x_2(n + 4M)$ of the second sequence, the first sub-sequence $X_{2\_M}$ of the second sequence, the second sub-sequence $X_{2\_2M}$ of the second sequence, the third sub-sequence $X_{2\_3M}$ of the second sequence and the fourth sub-sequence $X_{2\_4M}$ of the second sequence; and

carrying out a plurality of iterative calculations in sequence until the generation of the pseudo-random sequence is completed.

An embodiment of the present application provides a data processing device. The data processing device includes a memory, a processor and a data processing program stored in the memory and executable on the processor, where the data processing program, when executed by the processor, causes the processor to perform the steps of the above data processing method.

An embodiment of the present application provides a computer-readable storage medium storing a data processing program which, when executed by a processor, causes the processor to perform the steps of the above data processing method.

According to the data processing method, device and the computer-readable storage medium of the embodiments of the present application, a pseudo-random sequence is generated in parallel and iteratively by means of the recursive formula of the first sequence, the recursive formula of the second sequence, the first sub-sequence of the first sequence and the first sub-sequence of the second sequence, and data are scrambled or descrambled, solving the problems that the pseudo-random sequence generation in scrambling and descrambling takes time and the pseudo-random generation time increases linearly with the increase of sequence length.

## BRIEF DESCRIPTION OF DRAWINGS

Fig. 1 is a schematic structural diagram of Gold sequence generation according to an embodiment of the present application;

Fig. 2 is a flow diagram of a data processing method according to an embodiment of the present application;

Fig. 3 is a schematic diagram of a 64-bit generation method of a Gold sequence according to an embodiment of the present application;

Fig. 4 is a schematic diagram of a method for generating a first and a second pseudo-random sequence in parallel and iteratively according to an embodiment of the present application;

Fig. 5 is a schematic diagram of iterative parallel process of a pseudo-random sequence with M=64 according to an embodiment of the present application; and

Fig. 6 is a schematic structural diagram of a data processing device according to an embodiment of the present application.

## DETAILED DESCRIPTION

In order to make the technical problems, technical schemes and beneficial effects in the present application understandable, the present application will be described in detail with reference to the accompanying drawings and embodiments. It should be understood that the embodiments described herein are merely intended to explain the present application and are not intended to limit the present application.

In order to better illustrate the embodiments of the present application, the technology related to the embodiments will be also described below in detail.

In 3GPP LTE and 5G NR, Gold sequence is used to scramble and descramble data, and the generation formula is as follows:

$$c(n) = (x_1(n + N_C) + x_2(n + N_C)) \, mod \, 2 \qquad (1)$$

$$x_2(n + 31) = (x_2(n + 3) + x_2(n + 2) + x_2(n + 1) + x_2(n)) \, mod \, 2 \qquad (3)$$

where $N_C$ = 1600, a first sequence is initialized as: $x_1(0) = 1, x_1(n) = 0$, $n = 1,2,...,30$, and a second sequence is initialized as: $c_{init} = \sum_{i=0}^{30} x_2(i) \cdot 2^i$.

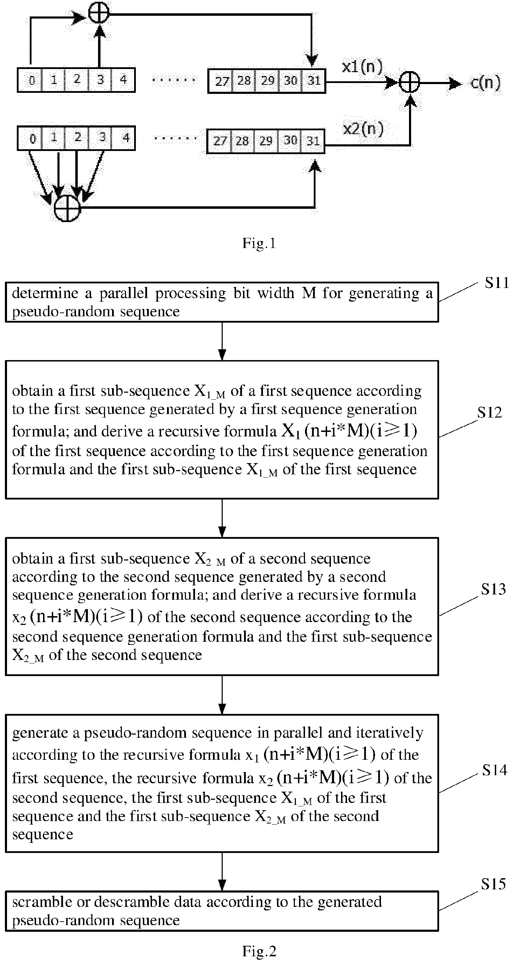

It can be seen from the above pseudo-random sequence generation formula that the Gold sequence is obtained through shift-and-add of two m sequences. Fig. 1 is a schematic structural diagram of Gold sequence generation.

However, with the increase in transmission rate, the scrambling code rate is required to be higher and higher, the usual scrambling code sequence generation method is time-consuming and cannot meet the requirements of high-speed communication. The parallel generation of scrambling code can improve the generation rate of scrambling code sequence. Common scrambling code parallel technologies mainly include a look-up table method, a matrix method and so on.

The look-up table method sacrifices space for time, which has the advantages of high speed and low complexity, but the required storage space increases exponentially with the increase of scrambling code length, so it is only suitable for generating scrambling code sequences with low generator polynomial order. For LTE and 5G NR, the generator polynomial of scrambling code sequence has reached the 31st order, so the look-up table method is no longer applicable.

The matrix method uses state transition matrix and initial vector to reduce multiple shift iterations in the generation of scrambling code sequence. The matrix method plays a certain role in saving storage space, but the calculation amount of multiplication of matrix increases sharply with the increase of the dimension of matrix. A long scrambling code sequence cannot be generated in parallel.

Based on the above technology, Fig. 2 is a flow diagram of a data processing method according to an embodiment of the present application. As shown in Fig. 2, a data processing method is provided, including step S11 to step S15.

At step S11, a parallel processing bit width M for generating a pseudo-random sequence is determined.

In some embodiments, M is related to the bit width of the processor, which is generally 32 bits or 64 bits.

At step S12, a first sub-sequence $X_{1\_M}$ of a first sequence is obtained according to the first sequence generated by a first sequence generation formula; and a recursive formula $x_1(n + i * M)$ $(i \geq 1)$ of the first sequence is derived according to the first sequence generation formula and the first sub-sequence $X_{1\_M}$ of the first sequence.

In some embodiments, the first sequence generation formula may refer to the aforementioned formula (2).

In some embodiments, the obtained first sub-sequence $X_{1\_M}$ of the first sequence is an M-bit unsigned number, which is expressed as:

$$X_1 = a_{M-1}x_1(m + M - 1) + a_{M-2}x_1(m + M - 2) + \cdots\cdots + a_0 x_1(m)$$

$$m = 0, M, 2M,...$$

$$a_i \in \{0,1\} \qquad i = 0,1,2,..., M - 1;$$

At step S 13, a first sub-sequence $X_{2\_M}$ of a second sequence is obtained according to the second sequence generated by a second sequence generation formula; and a recursive formula $x_2(n + i * M)$ $(i \geq 1)$ of the second sequence is derived according to the second sequence generation formula and the first sub-sequence $X_2\_M$ of the second sequence.

In some embodiments, the second sequence generation formula may refer to the aforementioned formula (3).

Similar to the above, the obtained first sub-sequence $X_2\_M$ of the second sequence is also an M-bit unsigned number, which is expressed as:

$$X_2 = a_{M-1}x_2(m + M - 1) + a_{M-2}x_2(m + M - 2) + \cdots\cdots + a_0 x_2(m)$$

$$m = 0, M, 2M, ...$$

$$a_i \in \{0,1\} \qquad i = 0,1,2,...,M-1;$$

Taking M=64 as an example, the calculation of the first sub-sequence $X_{1\_M}$ of the first sequence and the derivation of the recursive formula $x_1(n + i * M)(i \geq 1)$ of the first sequence will be explained below.

32-bit unsigned number $X_1\_low$ and $X_1\_h_{igh}$ are defined to store a low 32-bit and a high 32-bit of the sequence $X_{1\_M}$ respectively, and an initial value of $X_1\_low$ is 1. According to the aforementioned formula (2), $X_{1\_M}$ may be calculated as follows:

$$X_1\_tmp1 = (X_1\_low >> 1)^\wedge (X_1\_low >> 4) \qquad X_1 : bit\,32 - bit\,59$$

$$X_1\_tmp2 = (X_1\_low >> 29)\,|\,(X_1\_tmp1 << 3) \qquad X_1 : bit\,29 - bit\,60$$

$$X_1\_high = ((X_1\_tmp1 << 4) >> 4)\,|\,((X_1\_tmp1 \wedge X_1\_tmp2) << 28)$$

$$X_{1\_M} = X_1\_low + (X_1\_high << 32)$$

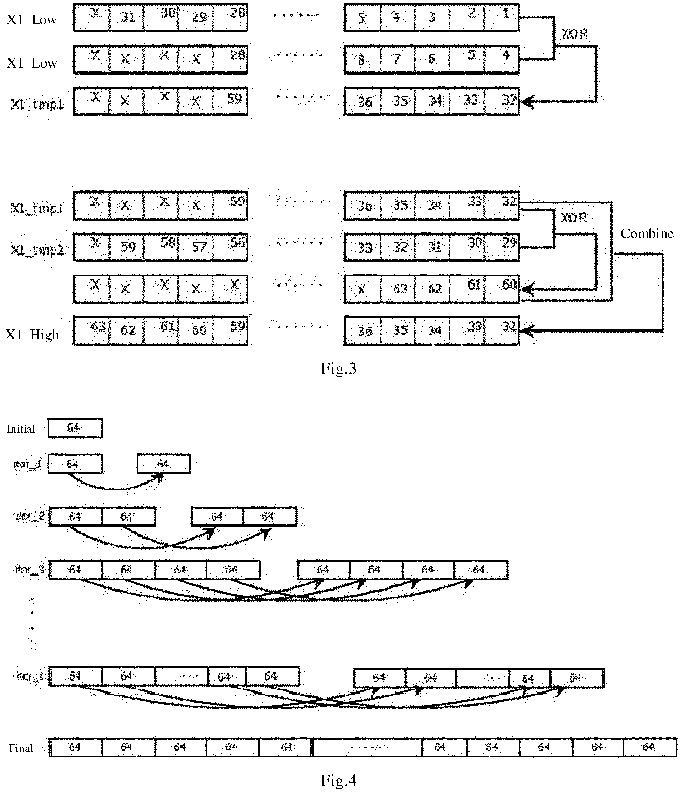

The calculation process is shown in Fig. 3.

Given the first sub-sequence $X_{1\_M}$ of the first sequence, $x_1(n)$ n E [64,127] of the first sequence, i.e., $X_{1\_2M}$, may be calculated in parallel. Taking the derivation of $x_1(n + 64)$ as an example:

$$
\begin{aligned}
x_1(n + 64) \\
= \; & x_1(n + 33 + 31) \\
= \; & x_1(n + 33 + 3) + x_1(n + 33) \\
= \; & x_1(n + 5 + 31) + x_1(n + 2 + 31) \\
= \; & x_1(n + 5 + 3) + x_1(n + 5) + x_1(n + 2 + 3) + x_1(n + 2) \\
= \; & x_1(n + 8) + x_1(n + 2)
\end{aligned}
$$

In the above derivation $x_1(n)$ n E [0,31], it can be seen from the recursive formula of $x_1(n + 64)$ that 56 bits of the sequence may be generated in parallel at one time, and the remaining 8 bits may be obtained through the generated 56 bits and the recursive formula of $x_1(n + 31)$. The calculation formula is as follows:

$$X_1\_tmp1 = (X_{1\_M} >> 8)^\wedge (X_{1\_M} >> 2) \qquad X_1 : bit\,64 - bit\,119$$

$$X_1\_tmp2 = (X_1\_tmp1 >> 28)\,|\,(X_1\_tmp1 >> 25) \qquad X_1 : bit\,120 - bit\,127$$

$$X_{1\_2M} = (X_1\_tmp2 << 56)\,|\,(X_1\_tmp1)$$

By analogy, the calculation formula of $x_1(n + 2 * 64)......x_1(n + i * 64)$ may be derived.

It should be noted that the calculation of the first sub-sequence $X_{2\_M}$ of the second sequence and the derivation of the recursive formula $x_2(n + i * M)(i \geq 1)$ of the second sequence are similar to the above calculation and derivation, and will not be repeated here.

In an embodiment, a step of obtaining the first sub-sequence $X_{1\_M}$ of the first sequence according to the first sequence generated by the first sequence generation formula includes: generating first M bits of the first sequence by the first sequence generation, and taking the first M bits of the first sequence as the first sub-sequence $X_{1\_M}$ of the first sequence.

In another embodiment, a step of obtaining the first sub-sequence $X_{2\_M}$ of the second sequence according to the second sequence generated by the second sequence generation formula includes: generating first M bits of the second sequence by the second sequence generation formula, and taking the first M bits of the second sequence as the first sub-sequence $X_{2\_M}$ of the second sequence.

In this embodiment, since there is no sequence offset $N_c$, the first M bit of the first sequence is directly taken as the first sub-sequence $X_{1\_M}$ of the first sequence.

In another embodiment, the step of obtaining the first sub-sequence $X_{1\_M}$ of the first sequence according to the first sequence generated by the first sequence generation formula includes: generating first M bits of the first sequence by the first sequence generation formula, and calculating a number of parallel iterations by a sequence offset $N_c$; generating first K bits of the first sequence in parallel and iteratively according to the calculated number of parallel iterations, where $K \geq M + N_c$; and taking M bits after the sequence offset $N_c$ of the first sequence as the first sub-sequence $X_{1\_M}$ of the first sequence.

In another embodiment, the step of obtaining the first sub-sequence $X_{2\_M}$ of the second sequence according to the second sequence generated by the second sequence generation formula includes: generating first M bits of the second sequence by the second sequence generation formula, and calculating a number of parallel iterations by a sequence offset $N_c$; generating first K bits of the second sequence in parallel and iteratively according to the calculated number of parallel iterations, where $K \geq M + N_c$; and taking M bits after the sequence offset $N_c$ of the second sequence as the first sub-sequence $X_{2\_M}$ of the second sequence.

In this embodiment, the step of calculating the number of parallel iterations by the sequence offset $N_c$ includes:

$t_1 = \log_2 B_1$, where $B_1 = \lceil N_c / M \rceil$ , and $t_1$ is the number of parallel iterations.

As an example, it is assumed that a sequence offset of 1600 bits, *i.e.*, $N_c$ = 1600, is skipped in the generation of the scrambling code sequence of LTE or 5g NR.

Therefore, in the generation of scrambling code sequence, it is necessary to skip $N_c$ = 1600bits for the first sequence and the second sequence, where $c(n) = (x_1(n + N_c) + x_2(n + N_c))\ mod\ 2$. Taking M = 64, 1600th bit to 1663rd bit of the sequence may be obtained at one time in this embodiment. Taking the first sequence $x_1(n)$ as an example, the implementation process is described with reference to Fig. 4.

The first 64 bits of the first sequence are generated by the first sequence generation formula.

Based on the required number of 64-bit sequences: $B_1$ = [1600/64] = 25, the number of iterations is calculated as: $t_1 = \log_2 25 = 5$.

According to the parallel iteration method, 1st bit to 2048th bit of the first sequence may be generated after 5 parallel iterations. Then, the 1600th bit of the first sequence, that is, the value in the first sequence after skipping 1600 bits, is generated. In a same way, the value in the second sequence after skipping 1600 bits is obtained.

At step S14, a pseudo-random sequence is generated in parallel and iteratively according to the recursive formula $x_1(n + i * M)(i \geq 1)$ of the first sequence, the recursive formula $x_2(n + i * M)\ (i \geq 1)$ of the second sequence, the first sub-sequence $X_{1\_M}$ of the first sequence and the first sub-sequence $X_{2\_M}$ of the second sequence.

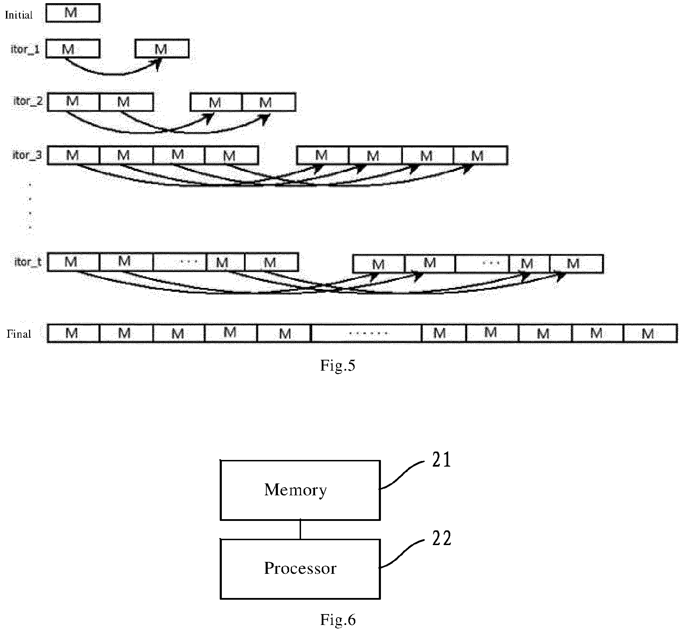

Referring to Fig. 5, the step of generating a pseudo-random sequence in parallel and iteratively according to the recursive formula $x_1(n + i * M)\ (i \geq 1)$ of the first sequence, the recursive formula $x_2(n + i * M)\ (i \geq 1)$ of the second sequence, the first sub-sequence $X_{1\_M}$ of the first sequence and the first sub-sequence $X_{2\_M}$ of the second sequence includes:

- starting a thread, and obtaining a second sub-sequence $X_{1\_2M}$ of the first sequence through calculation of the thread according to the recursive formula $x_1(n + M)$ of the first sequence and the first sub-sequence $X_{1\_M}$ of the first sequence; similarly, a second sub-sequence $X_{2\_2M}$ of the second sequence is obtained through calculation in a same way;

- starting two threads, and obtaining a third sub-sequence $X_{1\_3M}$ of the first sequence and a fourth sub-sequence $X_{1\_4M}$ of the first sequence through parallel calculation of the two threads, according to the recursive formula $x_1(n + 2M)$ of the first sequence, the first sub-sequence $X_{1\_M}$ of the first sequence and the second sub-sequence $X_{1\_2M}$ of the first sequence; similarly, a third sub-sequence $X_{2\_3M}$ of the second sequence and a fourth sub-sequence $X_{2\_4M}$ of the second sequence are obtained through calculation in a same way;

- starting four threads, and obtaining a fifth sub-sequence $X_{1\_5M}$ of the first sequence, a sixth sub-sequence $X_{1\_6M}$ of the first sequence, a seventh sub-sequence $X_{1\_7M}$ of the first sequence, and an eighth sub-sequence $X_{1\_8M}$ of the first sequence through parallel calculation of the four threads, according to the recursive formula $x_1(n + 4M)$ of the first sequence, the first sub-sequence $X_{1\_M}$ of the first sequence, the second sub-sequence $X_{1\_2M}$ of the first sequence, the third sub-sequence $X_{1\_3M}$ of the first sequence and the fourth sub-sequence $X_{1\_4M}$ of the first sequence; similarly, a fifth sub-sequence $X_{2\_5M}$ of the second sequence, a sixth sub-sequence $X_{2\_6M}$ of the second sequence, a seventh sub-sequence $X_{2\_7M}$ of the second sequence, and an eighth sub-sequence $X_{2\_8M}$ of the second sequence are obtained through calculation in a same way; and

- carrying out a plurality of iterative calculations in sequence until the generation of the pseudo-random sequence is completed.

In some embodiments, the step of carrying out the plurality of iterative calculations in sequence until the generation of the pseudo-random sequence is completed includes:

- starting a number of threads twice as many as a number of threads started in a previous iteration calculation in each of the iterative calculations; and keeping a number of threads started in a subsequent iterative calculation unchanged when the number of threads started reaches a maximum number of threads; and

- terminating the iterative calculations when a length of the pseudo-random sequence is equal to a target length of the pseudo-random sequence.

In some embodiments, a number of the iterative calculations is calculated by the following formula: $t_2 = \log_2 B_2$, where $B_2 = \lceil L/M \rceil$, $t_2$ is the number of the iterative calculations, and L is the target length of the pseudo-random sequence.

At step S15, data is scrambled or descrambled according to the generated pseudo-random sequence.

In order to better explain the process of generating a pseudo-random sequence in parallel and iteratively, the following is illustrated by taking M = 64 as an example (assuming that the maximum number of threads is 1024).

(1) The first iteration:
A thread is started, and a second sequence $X_{1\_2M}$ of the first sequence is obtained through parallel calculation according to the recursive formula $x_1(n + 64)$ of the first sequence and the first sub-sequence $X_{1\_M}$ of the first sequence. A second sub-sequence $X_{2\_2M}$ of the second sequence is obtained through calculation in a same way.

(2) The second iteration:
Two threads are started, and a third sub-sequence $X_{1\_3M}$ of the first sequence and a fourth sub-sequence $X_{1\_4M}$ of the first sequence are obtained through parallel calculation of the two threads, according to the recursive formula $x_1(n + 2 * 64)$ of the first sequence, the first sub-sequence $X_{1\_M}$ of the first sequence and the second sub-sequence $X_{1\_2M}$ of the first sequence. The first sub-sequence $X_{1\_M}$ is used as an initial value to recursively obtain the third sub-sequence $X_{1\_3M}$, and the second sub-sequence $X_{1\_2M}$ is used as an initial value to recursively obtain the fourth sub-sequence $X_{1\_4M}$. A third sub-sequence $X_{2\_3M}$ of the second sequence and a fourth sub-sequence $X_{2\_4M}$ of the second sequence are obtained through calculation in a same way.

(3) The third iteration:
Four threads are started, and a fifth sub-sequence $X_{1\_5M}$ of the first sequence, a sixth sub-sequence $X_{1\_6M}$ of the first sequence, a seventh sub-sequence $X_{1\_7M}$ of the first sequence, and an eighth sub-sequence $X_{1\_8M}$ of the first sequence are obtained through parallel calculation of the four threads, according to the recursive formula $x_1(n + 4 * 64)$ of the first sequence, the first sub-sequence $X_{1\_M}$ of the first sequence, the second sub-sequence $X_{1\_2M}$ of the first sequence, the third sub-sequence $X_{1\_3M}$ of the first sequence and the fourth sub-sequence $X_{1\_4M}$ of the first sequence. The first sub-sequence $X_{1\_M}$ is used as an initial value to recursively obtain the fifth sub-sequence $X_{1\_5M}$, the second sub-sequence $X_{1\_2M}$ as an initial value to recursively obtain the sixth sub-sequence $X_{1\_6M}$, the third sub-sequence $X_{1\_3M}$ as an initial value to recursively obtain the seventh sub-sequence $X_{1\_7M}$, and the fourth sub-sequence $X_{1\_4M}$ as an initial value to recursively obtain the eighth sub-sequence $X_{1\_8M}$. A fifth sub-sequence $X_{2\_5M}$ of the second sequence, a sixth sub-sequence $X_{2\_6M}$ of the second sequence, a seventh sub-sequence $X_{2\_7M}$ of the second sequence, and an eighth sub-sequence $X_{2\_8M}$ of the second sequence are obtained through calculation in a same way.

(4) Iterative calculations are carried out in sequence, and a number of threads started in each of the iterative calculations is twice as many as a number of threads started in a previous iteration calculation; a number of threads started in a subsequent iterative calculation remains unchanged when the number of threads started reaches 1024; and the iterative calculations will be terminated when a length of the pseudo-random sequence is equal to a target length of the pseudo-random sequence.

In the following, the process of generating a pseudo-random sequence in parallel and iteratively, with skipping

$N_c$ = 1600 bits for the first sequence and the second sequence, will be explained, and it is still assumed that M=64 and the maximum number of threads is 1024.

The first 64 bits of the first sequence and the second sequence are generated; and then, $N_c$ = 1600 bits are skipped for the first sequence and the second sequence according to the aforementioned implementation, to obtain 1600th bit to 1663rd bit of the first sequence and the second sequence.

Taking the first sequence and the second sequence after skipping $N_c$ = 1600 bits as initial values, scrambling codes are generated to scramble data. Assume that the length of data to be scrambled is L, containing a number of 64 bits: $B_2$ = [L/64], and requiring a total number of iterations: $t_2$ = $\log_2 B_2$. In each iteration, a corresponding number of threads are started for parallel generation according to the number of sub-sequences contained in the generated sequence. In each iteration, each thread performs XOR operation for the generated first sequence and second sequence of 64 bits to generate scrambling codes and scramble data.

When the length of the generated sequence is greater than or equal to 1024 × 64 bits, 1024 threads are started in each iteration to generate new 1024 × 64 bits of data using the last 1024 × 64 bits of data.

The method for generating a pseudo-random sequence in parallel according to the embodiments of the present application occupies less storage space and does not increase the sequence length, as compared with the look-up table method; and the calculation amount is small, as compared with the matrix method.

According to the data processing method of the embodiments of the present application, a pseudo-random sequence is generated in parallel and iteratively by means of the recursive formula of the first sequence, the recursive formula of the second sequence, the first sub-sequence of the first sequence and the first sub-sequence of the second sequence, and data are scrambled or descrambled; so as to solve the problems that the pseudo-random sequence generation in scrambling and descrambling takes time and the pseudo-random generation time increases linearly with the increase of sequence length.

Fig. 6 is a schematic structural diagram of a data processing device according to an embodiment of the present application. As shown in Fig. 6, a data processing device is provided, including a memory 21, a processor 22 and a data processing program stored in the memory 21 and executable on the processor 22. The data processing program, when executed by the processor 22, causes the processor to implement the steps of the data processing method described below:

- determining a parallel processing bit width M for generating a pseudo-random sequence;

- obtaining a first sub-sequence $X_{1\_M}$ of a first sequence according to the first sequence generated by a first sequence generation formula, and deriving a recursive formula $x_1(n + i * M)(i \geq 1)$ of the first sequence according to the first sequence generation formula and the first sub-sequence $X_{1\_M}$ of the first sequence;

- obtaining a first sub-sequence $X_{2\_M}$ of a second sequence according to the second sequence generated by a second sequence generation formula, and deriving a recursive formula $x_2(n + i * M)(i \geq 1)$ of the second sequence according to the second sequence generation formula and the first sub-sequence $X_{2\_M}$ of the second sequence;

- generating a pseudo-random sequence in parallel and iteratively according to the recursive formula $x_1(n + i * M)(i \geq 1)$ of the first sequence, the recursive formula $x_2(n + i * M)(i \geq 1)$ of the second sequence, the first sub-sequence $X_{1\_M}$ of the first sequence and the first sub-sequence $X_{2\_M}$ of the second sequence; and

- scrambling or descrambling data according to the generated pseudo-random sequence.

In some embodiments, the parallel processing bit width M is 32 bits or 64 bits.

In some embodiments, the data processing program, when executed by the processor 22, is used to implement the step of obtaining the first sub-sequence $X_{1\_M}$ of the first sequence according to the first sequence generated by the first sequence generation formula, including: generating first M bits of the first sequence by the first sequence generation formula, and taking the first M bits of the first sequence as the first sub-sequence $X_{1\_M}$ of the first sequence.

In some embodiments, the data processing program, when executed by the processor 22, is used to implement the step of obtaining the first sub-sequence $X_{2\_M}$ of the second sequence according to the second sequence generated by the second sequence generation formula, including: generating first M bits of the second sequence by the second sequence generation formula, and taking the first M bits of the second sequence as the first sub-sequence $X_{2\_M}$ of the second sequence.

In some embodiments, the data processing program, when executed by the processor 22, is used to implement the step of obtaining the first sub-sequence $X_{1\_M}$ of the first sequence according to the first sequence generated by the first sequence generation formula, including: generating first M bits of the first sequence by the first sequence generation formula, and calculating a number of parallel iterations by a sequence offset $N_c$; generating first K bits of the first sequence in parallel and iteratively according to the calculated number of parallel iterations, where $K \geq M + N_c$; and taking M bits after the sequence offset $N_c$ of the first sequence as the first sub-sequence $X_{1\_M}$ of the first sequence.

In some embodiments, the data processing program, when executed by the processor 22, is used to implement the step of obtaining the first sub-sequence $X_{2\_M}$ of the second sequence according to the second sequence generated by the second sequence generation formula, including: generating first M bits of the second sequence by the second sequence generation formula, and calculating a number of parallel iterations by a sequence offset $N_c$; generating first K bits of the second sequence in parallel and iteratively according to the calculated number of parallel iterations, where $K \geq M + N_c$; and taking M bits after the sequence offset $N_c$ of the second sequence as the first sub-sequence $X_{2\_M}$ of the second sequence.

In some embodiments, the data processing program, when executed by the processor 22, is used to implement the following step of the data processing method: $t_1 = \log_2 B_1$, where $B_1 = \lceil N_c/M \rceil$, and $t_1$ is the number of parallel iterations.

In embodiments of the claimed invention, the data processing program, when executed by the processor 22, is used to implement the following steps of the data processing method:

- starting a thread, and obtaining a second sub-sequence $X_{1\_2M}$ of the first sequence through calculation according to the recursive formula $x_1(n + M)$ of the first sequence and the first sub-sequence $X_{1\_M}$ of the first sequence; where, a second sub-sequence $X_{2\_2M}$ of the second sequence is obtained through calculation in a same way;

- starting two threads, and obtaining a third sub-sequence $X_{1\_3M}$ of the first sequence and a fourth sub-sequence $X_{1\_4M}$ of the first sequence through parallel calculation of the two threads, according to the recursive formula $x_1(n + 2M)$ of the first sequence, the first sub-sequence $X_{1\_M}$ of the first sequence and the second sub-sequence $X_{1\_2M}$ of the first sequence; where, a third sub-sequence $X_{2\_3M}$ of the second sequence and a fourth sub-sequence $X_{2\_4M}$ of the second sequence are obtained through calculation in a same way;

- starting four threads, and obtaining a fifth sub-sequence $X_{1\_5M}$ of the first sequence, a sixth sub-sequence $X_{1\_6M}$ of the first sequence, a seventh sub-sequence $X_{1\_7M}$ of the first sequence, and an eighth sub-sequence $X_{1\_8M}$ of the first sequence through parallel calculation of the four threads, according to the recursive formula $x_1(n + 4M)$ of the first sequence, the first sub-sequence $X_{1\_M}$ of the first sequence, the second sub-sequence $X_{1\_2M}$ of the first sequence, the third sub-sequence $X_{1\_3M}$ of the first sequence and the fourth sub-sequence $X_{1\_4M}$ of the first sequence; where, a fifth sub-sequence $X_{2\_5M}$ of the second sequence, a sixth sub-sequence $X_{2\_6M}$ of the second sequence, a seventh sub-sequence $X_{2\_7M}$ of the second sequence, and an eighth sub-sequence $X_{2\_8M}$ of the second sequence are obtained through calculation in a same way; and

- carrying out a plurality of iterative calculations in sequence until the generation of the pseudo-random sequence is completed.

In some embodiments, the data processing program, when executed by the processor 22, is used to implement the following steps of the data processing method:

- starting a number of threads twice as many as a number of threads started in a previous iteration calculation in each of the iterative calculations; and keeping a number of threads started in a subsequent iterative calculation unchanged when the number of threads started reaches a maximum number of threads; and

- terminating the iterative calculations when a length of the pseudo-random sequence is equal to a target length of the pseudo-random sequence.

In some embodiments, the data processing program, when executed by the processor 22, is used to implement the following step of the data processing method: $t_2 = \log_2 B_2$, where $B_2 = \lceil L/M \rceil$, $B_2 = \lceil L/M \rceil$ is the number of the iterative calculations, and L is the target length of the pseudo-random sequence.

According to the data processing device of the embodiments of the present application, a pseudo-random sequence is generated in parallel and iteratively by means of the recursive formula of the first sequence, the recursive formula of the second sequence, the first sub-sequence of the first sequence and the first sub-sequence of the second sequence, and data are scrambled or descrambled; so as to solve the problems that the pseudo-random sequence generation in scrambling and descrambling takes time and the pseudo-random generation time increases linearly with the increase of sequence length.

According to an embodiment of the present application, a computer-readable storage medium storing a data processing program is provided, where the data processing program, when executed by a processor, causes the processor to implement the steps of the data processing method described in the previous embodiments.

It should be noted that the computer-readable storage medium in this embodiment belongs to the same concept as the methods in the embodiments of the present application, where the implementation process is detailed in the method embodiments, and the technical features in the method embodiments are applicable in this embodiment, so they will not be repeated here.

According to the computer-readable storage medium of the embodiments of the present application, a pseudo-random sequence is generated in parallel and iteratively by means of the recursive formula of the first sequence, the recursive formula of the second sequence, the first sub-sequence of the first sequence and the first sub-sequence of the second sequence, and data are scrambled or descrambled; so as to solve the problems that the pseudo-random sequence generation in scrambling and descrambling takes time and the pseudo-random generation time increases linearly with the increase of sequence length.

Persons of ordinary skill in the art will appreciate that all or some of the steps, systems, functional modules/units in the apparatus disclosed above may be implemented as software, firmware, hardware, and appropriate combinations thereof. In a hardware implementation, partitioning between functional modules/units mentioned in the above description does not necessarily correspond to partitioning of physical components; For example, a physical component may have multiple functions, or a function or step may be performed by several physical components in cooperation. Some or all of the physical component may be implemented as software execute by a processor, such as a central processor, digital signal processor or microprocessor, or as hardware, or as an integrated circuit, such as an application-specific integrated circuit. Such software may be distributed over computer-readable medium, which may include computer storage medium (or non-transitory medium) and communication medium (or transitory medium). As known to those of ordinary skill in the art, the term computer storage medium includes volatile and non-volatile, removable and non-removable medium implemented in any method or technique for storing information, such as computer-readable instructions, data structures, program modules or other data. Computer storage medium include, but are not limited to, random access memory (RAM), read only memory (Read-Only Memory), electrically erasable programmable read only memory (EEPROM), flash memory or other memory technology, CD-ROM, digital versatile disks (DVDs) or other optical disk storage, magnetic cassettes, magnetic tapes, magnetic disk storage or other magnetic storage devices, or any other medium that can be used to store desired information and that can be accessed by a computer. Furthermore, as is well known to those of ordinary skill in the art, a communication medium typically contains computer-readable instructions, data structures, program modules, or other data in a modulated data signal such as a carrier wave or other transmission mechanism, and may include any information delivery medium.

## Claims

1. A data processing method, comprising:

   determining a parallel processing bit width M for generating a pseudo-random sequence (S11);
   obtaining a first sub-sequence $X_{1\_M}$ of a first sequence according to the first sequence generated by a first sequence generation formula, and deriving a recursive formula $x_1(n + i * M)(i \geq 1)$ of the first sequence according to the first sequence generation formula and the first sub-sequence $X_{1\_M}$ of the first sequence (S12);
   obtaining a first sub-sequence $X_{2\_M}$ of a second sequence according to the second sequence generated by a second sequence generation formula, and deriving a recursive formula $x_2(n + i * M)(i \geq 1)$ of the second sequence according to the second sequence generation formula and the first sub-sequence $X_{2\_M}$ of the second sequence (S13);
   generating a pseudo-random sequence in parallel and iteratively according to the recursive formula $x_1(n + i * M)(i \geq 1)$ of the first sequence, the recursive formula $x_2(n + i * M)(i \geq 1)$ of the second sequence, the first sub-sequence $X_{1\_M}$ of the first sequence and the first sub-sequence $X_{2\_M}$ of the second sequence (S 14); and
   scrambling or descrambling data according to the generated pseudo-random sequence (S15);
   **characterized in that**, the step of generating a pseudo-random sequence in parallel and iteratively according to the recursive formula $x_1(n + i * M)(i \geq 1)$ of the first sequence, the recursive formula $x_2(n + i * M)(i \geq 1)$ of the second sequence, the first sub-sequence $X_{1\_M}$ of the first sequence and the first sub-sequence $X_{2\_M}$ of the second sequence (S 14) comprises:

   starting a thread, and obtaining a second sub-sequence $X_{1\_2M}$ of the first sequence through calculation according to a recursive formula $x_1(n + M)$ of the first sequence and the first sub-sequence $X_{1\_M}$ of the first sequence; wherein, a second sub-sequence $X_{2\_2M}$ of the second sequence is obtained through calculation in a same way according to a recursive formula $x_2(n + M)$ of the second sequence and the first sub-sequence $X_{2\_M}$ of the second sequence;
   starting two threads, and obtaining a third sub-sequence $X_{1\_3M}$ of the first sequence and a fourth sub-

sequence $X_{1\_4M}$ of the first sequence through parallel calculation of the two threads, according to a recursive formula $x_1(n + 2M)$ of the first sequence, the first sub-sequence $X_{1\_M}$ of the first sequence and the second sub-sequence $X_{1\_2M}$ of the first sequence; wherein, a third sub-sequence $X_{2\_3M}$ of the second sequence and a fourth sub-sequence $X_{2\_4M}$ of the second sequence are obtained through parallel calculation in a same way, according to a recursive formula $x_2(n + 2M)$ of the second sequence, the first sub-sequence $X_{2\_M}$ of the second sequence and the second sub-sequence $X_{2\_2M}$ of the second sequence;

starting four threads, and obtaining a fifth sub-sequence $X_{1\_5M}$ of the first sequence, a sixth sub-sequence $X_{1\_6M}$ of the first sequence, a seventh sub-sequence $X_{1\_7M}$ of the first sequence, and an eighth sub-sequence $X_{1\_8M}$ of the first sequence through parallel calculation of the four threads, according to a recursive formula $x_1(n + 4M)$ of the first sequence, the first sub-sequence $X_{1\_M}$ of the first sequence, the second sub-sequence $X_{1\_2M}$ of the first sequence, the third sub-sequence $X_{1\_3M}$ of the first sequence and the fourth sub-sequence $X_{1\_4M}$ of the first sequence; wherein, a fifth sub-sequence $X_{2\_5M}$ of the second sequence, a sixth sub-sequence $X_{2\_6M}$ of the second sequence, a seventh sub-sequence $X_{2\_7M}$ of the second sequence, and an eighth sub-sequence $X_{2\_8M}$ of the second sequence are obtained through parallel calculation in a same way, according to a recursive formula $x_2(n + 4M)$ of the second sequence, the first sub-sequence $X_{2\_M}$ of the second sequence, the second sub-sequence $X_{2\_2M}$ of the second sequence, the third sub-sequence $X_{2\_3M}$ of the second sequence and the fourth sub-sequence $X_{2\_4M}$ of the second sequence; and carrying out a plurality of iterative calculations in sequence until the generation of the pseudo-random sequence is completed.

2. The method of claim 1, wherein the parallel processing bit width M is 32 bits or 64 bits.

3. The method of claim 1, wherein:
the step of obtaining the first sub-sequence $X_{1\_M}$ of the first sequence according to the first sequence generated by the first sequence generation formula (S12) comprises:

generating first M bits of the first sequence by the first sequence generation formula, and taking the first M bits of the first sequence as the first sub-sequence $X_{1\_M}$ of the first sequence; and
the step of obtaining the first sub-sequence $X_{2\_M}$ of the second sequence according to the second sequence generated by the second sequence generation formula comprises:
generating first M bits of the second sequence by the second sequence generation formula, and taking the first M bits of the second sequence as the first sub-sequence $X_{2\_M}$ of the second sequence.

4. The method of claim 1, wherein:
the step of obtaining the first sub-sequence $X_{1\_M}$ of the first sequence according to the first sequence generated by the first sequence generation formula (S12) comprises:

generating first M bits of the first sequence by the first sequence generation formula, and calculating a number of parallel iterations by a sequence offset $N_c$; generating first K bits of the first sequence in parallel and iteratively according to the calculated number of parallel iterations, wherein $K \geq M + N_c$; and taking M bits after the sequence offset $N_c$ of the first sequence as the first sub-sequence $X_{1\_M}$ of the first sequence; and
the step of obtaining the first sub-sequence $X_{2\_M}$ of the second sequence according to the second sequence generated by the second sequence generation formula (S13) comprises:
generating first M bits of the second sequence by the second sequence generation formula, and calculating a number of parallel iterations by a sequence offset $N_c$; generating first K bits of the second sequence in parallel and iteratively according to the calculated number of parallel iterations, wherein $K \geq M + N_c$; and taking M bits after the sequence offset $N_c$ of the second sequence as the first sub-sequence $X_{2\_M}$ of the second sequence.

5. The method of claim 4, wherein, the step of calculating the number of parallel iterations by the sequence offset $N_c$ comprises:

$t_1 = \log_2 B_1$, where $B_1 = \lceil N_c/M \rceil$, $t_1$ is the number of parallel iterations.

6. The method of claim 1, wherein the step of carrying out the plurality of iterative calculations in sequence until the generation of the pseudo-random sequence is completed comprises:

starting a number of threads twice as many as a number of threads started in a previous iteration calculation in each of the iterative calculations; and keeping a number of threads started in a subsequent iterative calculation unchanged when the number of threads started reaches a maximum number of threads; and terminating the iterative calculations when a length of the pseudo-random sequence is equal to a target length of the pseudo-random sequence.

7. The method of claim 1, wherein a number of the iterative calculations is calculated by the following formula:

$t_2 = \log_2 B_2$, where $B_2 = \lceil L/M \rceil$, $t_2$ is the number of the iterative calculations, and L is the target length of the pseudo-random sequence.

8. A data processing device, comprising a memory (21), a processor (21) and a data processing program stored in the memory (21) and executable on the processor (21), wherein the data processing program, when executed by the processor, causes the processor (21) to perform the steps of the data processing method of any of claims 1 to 7.

9. A computer-readable storage medium storing a data processing program which, when executed by a processor, causes the processor to perform the steps of the data processing method of any of claims 1 to 7.


**Patentansprüche**

1. Datenverarbeitungsverfahren, umfassend:

Ermitteln einer parallelen Verarbeitungsbitbreite M zum Erzeugen einer Pseudozufallssequenz (S11);
Erhalten einer ersten Teilsequenz $X_{1\_M}$ einer ersten Sequenz gemäß der ersten Sequenz, die durch eine erste Sequenzerzeugungsformel erzeugt wird, und Ableiten einer Rekursionsformel $x_1 (n + i * M)$ $(i \geq 1)$ der ersten Sequenz gemäß der ersten Sequenzerzeugungsformel und der ersten Teilsequenz $X_{1\_M}$ der ersten Sequenz (S12);
Erhalten einer ersten Teilsequenz $X_{2\_M}$ einer zweiten Sequenz gemäß der zweiten Sequenz, die durch eine zweite Sequenzerzeugungsformel erzeugt wird, und Ableiten einer Rekursionsformel $x_2 (n + i * M)$ $(i \geq 1)$ der zweiten Sequenz gemäß der zweiten Sequenzerzeugungsformel und der ersten Teilsequenz $X_{2\_M}$ der zweiten Sequenz (S13);
paralleles und iteratives Erzeugen einer Pseudozufallssequenz gemäß der Rekursionsformel $x_1(n + i * M)(i \geq 1)$ der ersten Sequenz, der Rekursionsformel $x_2 (n + i * M)(i \geq 1)$ der zweiten Sequenz, der ersten Teilsequenz $X_{1\_M}$ der ersten Sequenz und der ersten Teilsequenz $X_{1\_M}$ der zweiten Sequenz (S14); und
Verschlüsseln oder Entschlüsseln von Daten gemäß der erzeugten Pseudozufallssequenz (S15);
**dadurch gekennzeichnet, dass** der Schritt des parallelen und iterativen Erzeugens einer Pseudozufallssequenz gemäß der Rekursionsformel $x_1 (n + i * M)(i \geq 1)$ der ersten Sequenz, der Rekursionsformel $x_2 (n + i * M)(i \geq 1)$ der zweiten Sequenz, der ersten Teilsequenz $X_{1\_M}$ der ersten Sequenz und der ersten Teilsequenz $X_{2\_M}$ der zweiten Sequenz (S14) umfasst:

Starten eines Threads und Erhalten einer zweiten Teilsequenz $X_{1\_2M}$ der ersten Sequenz durch eine Berechnung gemäß einer Rekursionsformel $x_1(n + M$ der ersten Sequenz und der ersten Teilsequenz $X_{1\_M}$ der ersten Sequenz, wobei eine zweite Teilsequenz $X_{2\_2M}$ der zweiten Sequenz durch eine Berechnung in einer gleichen Weise gemäß einer Rekursionsformel $x_2 (n + M)$ der zweiten Sequenz und der ersten Teilsequenz $x_2 (n + M)$ der zweiten Sequenz erhalten wird;
Starten von zwei Threads und Erhalten einer dritten Teilsequenz $X_{1\_3M}$ der ersten Sequenz und einer vierten Teilsequenz $X_{1\_4M}$ der ersten Sequenz durch eine parallele Berechnung der beiden Threads gemäß einer Rekursionsformel $x_1(n + 2 M)$ der ersten Sequenz, der ersten Teilsequenz $X_{1\_M}$ der ersten Sequenz und der zweiten Teilsequenz $X_{1\_2M}$ der ersten Sequenz; wobei eine dritte Teilsequenz $X_{2\_3M}$ der zweiten Sequenz und eine vierte Teilsequenz $X_{2\_4M}$ der zweiten Sequenz in einer gleichen Weise durch eine parallele Berechnung erhalten werden, gemäß einer Rekursionsformel $x_2 (n + 2 M)$ der zweiten Sequenz, der ersten Teilsequenz $X_{2\_M}$ der zweiten Sequenz und der zweiten Teilsequenz $X_{2\_2M}$ der zweiten Sequenz;
Starten von vier Threads und Erhalten einer fünften Teilsequenz $X_{1\_5M}$ der ersten Sequenz, einer sechsten Teilsequenz $X_{1\_6M}$ der ersten Sequenz, einer siebten Teilsequenz $X_{1\_7M}$ der ersten Sequenz und einer achten Teilsequenz $X_{1\_7M}$ der ersten Sequenz durch eine parallele Berechnung der vier Threads gemäß einer Rekursionsformel $x_1 (n + 4M)$ der ersten Sequenz, der ersten Teilsequenz $X_{1\_M}$ der ersten Sequenz, der zweiten Teilsequenz $X_{1\_2M}$ der ersten Sequenz, der dritten Teilsequenz $X_{1\_3M}$ der ersten Sequenz und der vierten Teilsequenz $X_{1\_4M}$ der ersten Sequenz; wobei eine fünfte Teilsequenz $X_{1\_5M}$ der zweiten Se-

quenz, eine sechste Teilsequenz $X_{2\_6M}$ der zweiten Sequenz, eine siebte Teilsequenz $X_{2\_7M}$ der zweiten Sequenz und eine achte Teilsequenz $X_{2\_8M}$ der zweiten Sequenz in einer gleichen Weise durch eine parallele Berechnung erhalten werden, gemäß einer Rekursionsformel $x_2 (n + 4M)$ der zweiten Sequenz, der ersten Teilsequenz $X_{2\_M}$ der zweiten Sequenz, der zweiten Teilsequenz $X_{2\_2M}$ der zweiten Sequenz, der dritten Teilsequenz $X_{2\_3M}$ der zweiten Sequenz und der vierten Teilsequenz $X_{2\_4M}$ der zweiten Sequenz; und

Ausführen einer Vielzahl von iterativen Berechnungen nacheinander bis die Erzeugung der Pseudozufallssequenz abgeschlossen ist.

2. Verfahren nach Anspruch 1, wobei die parallele Verarbeitungsbitbreite M gleich 32 Bits oder 64 Bits ist.

3. Verfahren nach Anspruch 1, wobei:
der Schritt des Erhaltens der ersten Teilsequenz $X_{1\_M}$ der ersten Sequenz gemäß der ersten Sequenz, die durch die erste Sequenzerzeugungsformel erzeugt wird (S12), umfasst:

Erzeugen von ersten M Bits der ersten Sequenz durch die erste Sequenzerzeugungsformel und Übernehmen der ersten M Bits der ersten Sequenz als die erste Teilsequenz $X_{1\_M}$ der ersten Sequenz; und der Schritt des Erhaltens der ersten Teilsequenz $X_{2\_M}$ der zweiten Sequenz gemäß der zweiten Sequenz, die durch die zweite Sequenzerzeugungsformel erzeugt wird (S12), umfasst:
Erzeugen von ersten M Bits der zweiten Sequenz durch die zweite Sequenzerzeugungsformel und Übernehmen der ersten M Bits der zweiten Sequenz als die erste Teilsequenz $X_{2\_M}$ der zweiten Sequenz.

4. Verfahren nach Anspruch 1, wobei:
der Schritt des Erhaltens der ersten Teilsequenz $X_{1\_M}$ der ersten Sequenz gemäß der ersten Sequenz, die durch die erste Sequenzerzeugungsformel erzeugt wird (S12), umfasst:

Erzeugen von ersten M Bits der ersten Sequenz durch die erste Sequenzerzeugungsformel und Berechnen einer Anzahl von parallelen Iterationen durch einen Sequenzoffset $N_c$; paralleles und iteratives Erzeugen von ersten K Bits der ersten Sequenz gemäß der berechneten Anzahl von parallelen Iterationen, wobei $K \geq M + N_c$ ist; und Übernehmen von M Bits nach dem Sequenzoffset $N_c$ der ersten Sequenz als die erste Teilsequenz $X_{1\_M}$ der ersten Sequenz; und
der Schritt des Erhaltens der ersten Teilsequenz $X_{2\_M}$ der zweiten Sequenz gemäß der zweiten Sequenz, die durch die zweite Sequenzerzeugungsformel erzeugt wird (S13), umfasst:
Erzeugen von ersten M Bits der zweiten Sequenz durch die zweite Sequenzerzeugungsformel und Berechnen einer Anzahl von parallelen Iterationen durch einen Sequenzoffset $N_c$; paralleles und iteratives Erzeugen von ersten K Bits der zweiten Sequenz gemäß der berechneten Anzahl von parallelen Iterationen, wobei $K \geq M + N_c$ ist; und Übernehmen von M Bits nach dem Sequenzoffset $N_c$ der zweiten Sequenz als die erste Teilsequenz $X_{2\_M}$ der zweiten Sequenz.

5. Verfahren nach Anspruch 4, wobei der Schritt des Berechnens der Anzahl von parallelen Iterationen durch einen Sequenzoffset $N_c$ umfasst
$t_1 = log_2 B_1$, wobei $B_1 = [N_c/M]$, ist und $t_1$ die Anzahl von parallelen Iterationen ist.

6. Verfahren nach Anspruch 1, wobei der Schritt des Ausführens der Vielzahl von iterativen Berechnungen nacheinander bis die Erzeugung der Pseudozufallssequenz abgeschlossen ist, umfasst:

Starten einer Anzahl von Threads, die zweimal so groß wie die Anzahl von Threads in einer vorherigen Iterationsberechnung ist, in jeder der iterativen Berechnungen; und unverändertes Beibehalten einer Anzahl von Threads, die in einer nachfolgenden iterativen Berechnung gestartet werden, wenn die Anzahl von Threads eine maximale Anzahl von Threads erreicht; und
Abschließen der iterativen Berechnungen, wenn eine Länge der Pseudozufallssequenz gleich einer Ziellänge der Pseudozufallssequenz ist.

7. Verfahren nach Anspruch 1, wobei eine Anzahl von iterativen Berechnungen durch die folgende Formel berechnet wird:
$t_2 = log_2 B_2$, wobei $B_2 = [L/M]$, ist, $t_2$ die Anzahl der iterativen Berechnungen ist und $L$ die Ziellänge der Pseudozufallssequenz ist.

**EP 3 817 251 B1**

8. Datenverarbeitungsvorrichtung, die einen Speicher (21), einen Prozessor (21) und ein Datenverarbeitungsprogramm umfasst, das in dem Speicher (21) gespeichert ist und durch den Prozessor (21) ausführbar ist, wobei das Datenverarbeitungsprogramm, wenn es von dem Prozessor ausgeführt wird, den Prozessor (21) veranlasst, die Schritte des Datenverarbeitungsverfahrens nach einem der Ansprüche 1 bis 7 durchzuführen.

9. Computerlesbares Speichermedium, in dem ein Datenverarbeitungsprogramm gespeichert ist, das, wenn es von einem Prozessor ausgeführt werden, den Prozessor veranlasst, die Schritte des Datenverarbeitungsverfahrens nach einem der Ansprüche 1 bis 7 durchzuführen.

**Revendications**

1. Procédé de traitement de données, comprenant les étapes consistant à :

déterminer une largeur de bits de traitement parallèle M pour générer une séquence pseudo-aléatoire (S11) ;
obtenir une première sous-séquence $X_{1\_M}$ d'une première séquence selon la première séquence générée par une première formule de génération de séquence, et dériver une formule récursive $x_1(n + i * M)(i \geq 1)$ de la première séquence selon la première formule de génération de séquence et la première sous-séquence $X_{1\_M}$ de la première séquence (S12) ;
obtenir une première sous-séquence $X_{2\_M}$ d'une seconde séquence selon la seconde séquence générée par une seconde formule de génération de séquence, et dériver une formule récursive $x_2(n+ i * M)(i \geq 1)$ de la seconde séquence selon la seconde formule de génération de séquence et la première sous-séquence $X_{2\_M}$ de la seconde séquence (S13) ;
générer une séquence pseudo-aléatoire en parallèle et de manière itérative selon la formule récursive $x_1(n+ i * M)(i \geq 1)$ de la première séquence, la formule récursive $x_2(n + i * M)(i \geq 1)$ de la seconde séquence, la première sous-séquence $X_{1\_M}$ de la première séquence et la première sous-séquence $X_{2\_M}$ de la seconde séquence (S14) ; et
embrouiller ou désembrouiller les données selon la séquence pseudo-aléatoire générée (S15) ;
le procédé étant **caractérisé en ce que** l'étape de génération d'une séquence pseudo-aléatoire en parallèle et de manière itérative selon la formule récursive $x_1(n+ i * M)(i \geq 1)$ de la première séquence, la formule récursive $x_2(n + i * M)(i \geq 1)$ de la seconde séquence, la première sous-séquence $X_{1\_M}$ de la première séquence et la première sous-séquence $X_{2\_M}$ de la seconde séquence (S14) comprend les étapes consistant à :

démarrer un fil d'exécution et obtenir une deuxième sous-séquence $X_{1\_2M}$ de la première séquence par calcul selon une formule récursive $x_1(n + M)$ de la première séquence et de la première sous-séquence $X_{1\_M}$ de la première séquence ; une deuxième sous-séquence $X_{2\_2M}$ de la seconde séquence étant obtenue d'une même manière par calcul selon une formule récursive $x_2(n + M)$ de la seconde séquence et de la première sous-séquence $X_{2\_M}$ de la seconde séquence ;
démarrer deux fils d'exécution et obtenir une troisième sous-séquence $X_{1\_3M}$ de la première séquence et une quatrième sous-séquence $X_{1\_4M}$ de la première séquence par calcul parallèle des deux fils d'exécution, selon une formule récursive $x_1(n + 2M)$ de la première séquence, de la première sous-séquence $X_{1\_M}$ de la première séquence et de la deuxième sous-séquence $X_{1\_2M}$ de la première séquence ; une troisième sous-séquence $X_{2\_3M}$ de la seconde séquence et une quatrième sous-séquence $X_{2\_4M}$ de la seconde séquence étant obtenues d'une même manière par calcul parallèle, selon une formule récursive $x_2(n+2M)$ de la seconde séquence, la première sous-séquence $X_{2\_M}$ de la seconde séquence et la deuxième sous-séquence $X_{2\_2M}$ de la seconde séquence ;
démarrer quatre fils d'exécution et obtenir une cinquième sous-séquence $X_{1\_5M}$ de la première séquence, une sixième sous-séquence $X_{1\_6M}$ de la première séquence, une septième sous-séquence $X_{1\_7M}$ de la première séquence et une huitième sous-séquence $X_{1\_8M}$ de la première séquence par calcul parallèle des quatre fils d'exécution, selon une formule récursive $x_1(n + 4M)$ de la première séquence, de la première sous-séquence $X_{1\_M}$ de la première séquence, de la deuxième sous-séquence $X_{1\_2M}$ de la première séquence, de la troisième sous-séquence $X_{1\_3M}$ de la première séquence et de la quatrième sous-séquence $X_{1\_4M}$ de la première séquence ; une cinquième sous-séquence $X_{2\_5M}$ de la seconde séquence, une sixième sous-séquence $X_{2\_6M}$ de la seconde séquence, une septième sous-séquence $X_{2\_7M}$ de la seconde séquence et une huitième sous-séquence $X_{2\_8M}$ de la seconde séquence étant obtenues d'une même manière par calcul parallèle, selon une formule récursive $x_2(n + 4M)$ de la seconde séquence, de la première sous-séquence $X_{2\_M}$ de la seconde séquence, de la deuxième sous-séquence $X_{2\_2M}$ de la seconde séquence, de la troisième sous-séquence $X_{2\_3M}$ de la seconde séquence et de la quatrième sous-séquence $X_{2\_4M}$

de la seconde séquence ; et

exécuter une pluralité de calculs itératifs en séquence jusqu'à ce que la génération de la séquence pseudo-aléatoire soit terminée.

2. Procédé selon la revendication 1, dans lequel la largeur de bits de traitement parallèle M est de 32 bits ou 64 bits.

3. Procédé selon la revendication 1, dans lequel :
l'étape d'obtention de la première sous-séquence $X_{1\_M}$ de la première séquence selon la première séquence générée par la première formule de génération de séquence (S12) comprend les étapes consistant à :

générer M premiers bits de la première séquence au moyen de la première formule de génération de séquence et considérer les M premiers bits de la première séquence comme la première sous-séquence $X_{1\_M}$ de la première séquence ; et
l'étape d'obtention de la première sous-séquence $X_{2\_M}$ de la seconde séquence selon la seconde séquence générée par la seconde formule de génération de séquence comprend les étapes consistant à :
générer M premiers bits de la seconde séquence au moyen de la seconde formule de génération de séquence et considérer les M premiers bits de la seconde séquence comme la première sous-séquence $X_{2\_M}$ de la seconde séquence.

4. Procédé selon la revendication 1, dans lequel :
l'étape d'obtention de la première sous-séquence $X_{1\_M}$ de la première séquence selon la première séquence générée par la première formule de génération de séquence (S12) comprend les étapes consistant à :

générer M premiers bits de la première séquence au moyen de la première formule de génération de séquence et calculer un nombre d'itérations parallèles au moyen d'un décalage de séquence $N_c$ ; générer K premiers bits de la première séquence en parallèle et de manière itérative selon le nombre calculé d'itérations parallèles, où $K \geq M + N_c$ ; et considérer M bits après le décalage de séquence $N_c$ de la première séquence comme première sous-séquence $X_{1\_M}$ de la première séquence ; et
l'étape d'obtention de la première sous-séquence $X_{2\_M}$ de la seconde séquence selon la seconde séquence générée par la seconde formule de génération de séquence (S13) comprend les étapes consistant à :
générer M premiers bits de la seconde séquence au moyen de la seconde formule de génération de séquence et calculer un nombre d'itérations parallèles au moyen d'un décalage de séquence $N_c$ ; générer K premiers bits de la seconde séquence en parallèle et de manière itérative selon le nombre calculé d'itérations parallèles, où $K \geq M + N_c$ ; et considérer M bits après le décalage de séquence $N_c$ de la seconde séquence comme première sous-séquence $X_{2\_M}$ de la seconde séquence.

5. Procédé selon la revendication 4, dans lequel l'étape de calcul du nombre d'itérations parallèles au moyen du décalage de séquence $N_c$ comprend :

$t_1 = log_2B_1$ , où $B_1 = \lceil N_c/M \rceil$ , $t_1$ est le nombre d'itérations parallèles.

6. Procédé selon la revendication 1, dans lequel l'étape d'exécution de la pluralité de calculs itératifs en séquence jusqu'à ce que la génération de la séquence pseudo-aléatoire soit terminée comprend les étapes consistant à :

démarrer un nombre de fils d'exécution deux fois supérieur au nombre de fils d'exécution démarrés lors d'un calcul itératif précédent dans chacun des calculs itératifs ; et maintenir inchangé le nombre de fils d'exécution démarrés dans un calcul itératif ultérieur lorsque le nombre de fils d'exécution démarrés atteint un nombre maximum de fils d'exécution ; et
terminer les calculs itératifs lorsqu'une longueur de la séquence pseudo-aléatoire est égale à une longueur cible de la séquence pseudo-aléatoire.

7. Procédé selon la revendication 1, dans lequel un nombre des calculs itératifs est calculé au moyen de la formule suivante :

$t_2 = log_2B_2$, où $B_2 = \lceil L/M \rceil$ , $t_2$ est le nombre des calculs itératifs et L est la longueur cible de la séquence pseudo-aléatoire.

8. Dispositif de traitement de données, comprenant une mémoire (21), un processeur (21) et un programme de traitement de données stocké dans la mémoire (21) et exécutable sur le processeur (21), le programme de traitement de données, lorsqu'il est exécuté par le processeur, amenant le processeur (21) à effectuer les étapes du procédé de traitement de données selon l'une quelconque des revendications 1 à 7.

**9.** Support de stockage lisible par ordinateur, stockant un programme de traitement de données qui, lorsqu'il est exécuté par un processeur, amène le processeur à effectuer les étapes du procédé de traitement de données selon l'une quelconque des revendications 1 à 7.

Fig.1

determine a parallel processing bit width M for generating a pseudo-random sequence — S11

obtain a first sub-sequence $X_{1\_M}$ of a first sequence according to the first sequence generated by a first sequence generation formula; and derive a recursive formula $X_1(n+i*M)(i \geqslant 1)$ of the first sequence according to the first sequence generation formula and the first sub-sequence $X_{1\_M}$ of the first sequence — S12

obtain a first sub-sequence $X_{2\_M}$ of a second sequence according to the second sequence generated by a second sequence generation formula; and derive a recursive formula $x_2(n+i*M)(i \geqslant 1)$ of the second sequence according to the second sequence generation formula and the first sub-sequence $X_{2\_M}$ of the second sequence — S13

generate a pseudo-random sequence in parallel and iteratively according to the recursive formula $x_1(n+i*M)(i \geqslant 1)$ of the first sequence, the recursive formula $x_2(n+i*M)(i \geqslant 1)$ of the second sequence, the first sub-sequence $X_{1\_M}$ of the first sequence and the first sub-sequence $X_{2\_M}$ of the second sequence — S14

scramble or descramble data according to the generated pseudo-random sequence — S15

Fig.2

Fig.3

Fig.4

Fig.5

Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105227259 A